# EUROPEAN PATENT SPECIFICATION

(11) **EP 0 566 617 B1**
(45) Date of publication and mention of the grant of the patent: **20.03.1996**
(21) Application number: 92902296.0
(22) Date of filing: 14.01.1992
(51) Int. Cl.: B62D 5/083, F16J 15/32

(54) **ROTARY VALVE SEAL ASSEMBLY**
DREHVENTIL-ABDICHTUNGSEINRICHTUNG
JOINT D'ETANCHEITE POUR VALVE TOURNANTE

(30) Priority: 16.01.1991 GB 9100903
(43) Date of publication of application: 27.10.1993
(73) Proprietor: ADWEST ENGINEERING LIMITED, Reading RG5 4SN, Berkshire (GB)
(72) Inventor: MILLARD, Barry, John 327 Wokingham Road, Reading RG6 2EB (GB)
(74) Representative: Dealtry, Brian
(86) International application number: GB9200069
(87) International publication number: WO9212886

(56) References cited:
- EP-A- 0 321 770
- DE-A- 4 017 036
- GB-A- 2 030 093
- US-A- 3 602 255
- US-A- 4 566 703
- ENERGIE FLUIDE vol. 25, no. 1, January 1986, PARIS pages 80 - 83; 'CONCEPT OMEGAT:L'ELEMENT MODERNE D'ETANCHEITE'

## Description

The present invention relates to a seal assembly for a rotary valve, in particular a rotary valve of the type used in power assisted steering mechanisms for vehicles. The invention also relates to a rotary valve including such a seal assembly.

A typical rotary valve as used in a power assisted steering mechanism of a vehicle is described in our UK patent 1299506. The rotary valve includes a rotor member located in a valve sleeve which is rotatably received in a housing. Seals are provided on the valve sleeve which sealingly isolate annular hydraulic fluid passageways from one another. The seals are usually formed from a plastics material such as polytetrafluoroethylene and whilst the hydraulic fluid and seals are at an elevated working temperature adequate sealing is provided between the seals and housing. However, there is a tendency for the plastics material to heat set when at the elevated working temperature so that on subsequent cooling a slight gap can occur between the seal and housing caused by the difference in co-efficients of thermal expansion for the material of the seal and housing. Thus at initial start-up at a cold temperature leakage can occur between the seal and housing resulting in a delay in build-up of hydraulic pressure which can be noticed by a driver of a vehicle by a reduction in the amount of power assistance given to operating the steering mechanism. The degree of leakage is temperature dependent and tends to be noticed in cold weather conditions. This kind of leakage is generally referred to as a cold-start phenomenon and is also exaggerated when the housing is made of a metal having poor wear characteristics such as aluminium.

US 4566703 discloses a seal assembly which is capable of sealing high and low fluid pressures between a cylindrical member and a bore which are rotatable relative to one another. The seal assembly in US 4566703 is located within an annular groove in the cylindrical member and has an annular seal body as defined in the precharacterising portion of claim 1.

It is a general aim of the present invention to provide a seal assembly which is capable of eliminating or substantially reducing the cold start phenomenon.

According to one aspect of the present invention there is provided a hydraulic fluid seal assembly for providing a seal between a cylindrical member and a bore formed in a housing, the housing and cylindrical member being rotatable relative to one another, the seal assembly being located within an annular groove formed in the cylindrical member and having an annular seal body of a plastics material having an outer axially extending circumferential face for sealing abutment with the bore and at least one radially extending end face for sealing abutment with a side face of the groove, the seal body having an axial extent which is less than the axial extent of said groove and a resilient ring member located in abutment with the inner axially extending circumferential face of the seal body for urging said outer circumferential face radially outward to maintain sealing abutment between said outer circumferential face and the bore, the ring member having an axial end face contiguous with or located in-board of said end face of the seal body characterised in that the resilient ring member serves to maintain said sealing abutment during cooling of the seal and housing, the resilient ring member being spaced from the groove bottom and the resilient ring and seal body being interconnected so as to be slidably axially movable in unison with one another within said groove.

Preferably the seal body has a solid cross-section and is formed from a plastics material having a low co-efficient of friction, a suitable plastics material being polytetrafluoroethylene. Preferably the polytetrafluoroethylene contains a filler such as a glass filler, preferably about 15% by weight and has a minimum elongation of about 150% and a minimum tensile strength of about 1500psi. Other suitable fillers may be carbon/graphite or suitable mineral.

The resilient ring member is preferably in the form of a split ring and is preferably formed from a resilient metal such as stainless steel. Preferably the inner circumferential face of the seal body and the outer circumferential face of the ring member have complimentary profiles which when engaged in abutment axially centralise the ring member and seal body and/or prevent relative axial movement between the ring member and seal body.

Preferably the complimentary profile on both the ring member and seal body is defined by opposed surfaces inclined relative to the axis of the ring member/seal body. Preferably the included angle between the opposed surfaces is about 155°.

On application of fluid pressure it is necessary for the seal assembly to slide axially in the groove in order to bring an end face of the seal body into sealing abutment with a side face of the groove. For a rotary valve used in a power assisted steering mechanism it is desirable for the seal assembly to move quickly into abutment with the side face of the groove.

Preferably the axial extent of the ring member is less than that of the seal body and the seal body includes a pair of radially extending end faces for sealing abutment with respective opposed sides of said groove.

Accordingly, it is preferable that, in cross-section, the combined radial height of the assembled seal body and ring member is the same as or greater than the axial width of the seal body. Preferably the radially extending end face of the seal body extends radially inwardly from the outer circumference of the seal body for the entire or majority of said combined radial height.

The outer axially extending circumferential face of the seal body is cylindrical and extends continuously for the entire or majority of the width of the seal body. Advantageously, the outer peripheral edges of the seal body are defined by chamfered faces. The extent of the chamfer along the outer circumferential face may be adjusted during manufacture in order to reduce the contact area with the bore and thereby reduce the force required for axially sliding the seal assembly.

According to another aspect of the invention there is provided a rotary valve including a valve sleeve and a rotor rotatably received in a bore of a housing, the valve sleeve having at least one seal assembly as defined above providing a seal between the sleeve and the bore.

Various aspects of the present invention are hereinafter described with reference to the accompanying drawings, in which -
Figure 1 is a sectional view of a rotary valve for a power assisted steering mechanism according to the present invention;
Figure 2 is an enlarged sectional view of a seal assembly according to a first embodiment of the present invention;
Figure 3 is an enlarged sectional view of a seal assembly according to a second embodiment of the present invention;
Figure 4 is an enlarged sectional view of a seal assembly according to a third embodiment of the present invention;
Figure 5 is a side view of a ring member of a seal assembly according to the present invention.

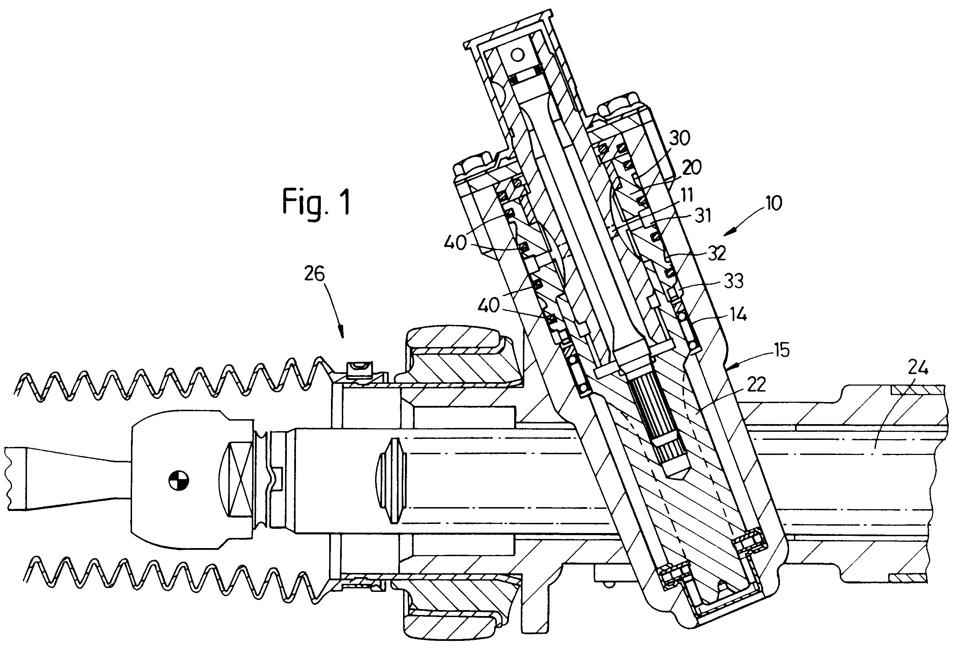

Referring initially to Figure 1, there is shown a rotary valve 10 for use in a power assisted steering mechanism. The rotary valve 10 is basically of the same construction as that shown in our UK patent 1299506 and reference should be made thereto for a fuller description of the rotary valve and power assisted steering mechanism. In essence, the rotary valve 10 includes a rotor 11 which is received in a valve sleeve 20 which is received in a bore 14 of housing 15. The sleeve 20 is connected to a worm gear 22. The worm gear 22 drivingly engages with a rack 24 of a steering mechanism 26. Operation of the rotary valve 10 and steering mechanism 26 are described in UK patent 1299506.

The outer circumference of the sleeve 20 includes four annular hydraulic fluid passageways 30,31,32 and 33 which, in use, are supplied with pressurised hydraulic fluid which is distributed by the rotary valve to provide power assistance in a known manner.

The passageways 30,31,32 and 33 are isolated from one another by annular seal assemblies 40. Each seal assembly 40 is located within a groove 41 formed in the sleeve 20 and in use provides a seal between the wall of the bore 14 and the outer surface of sleeve 20.

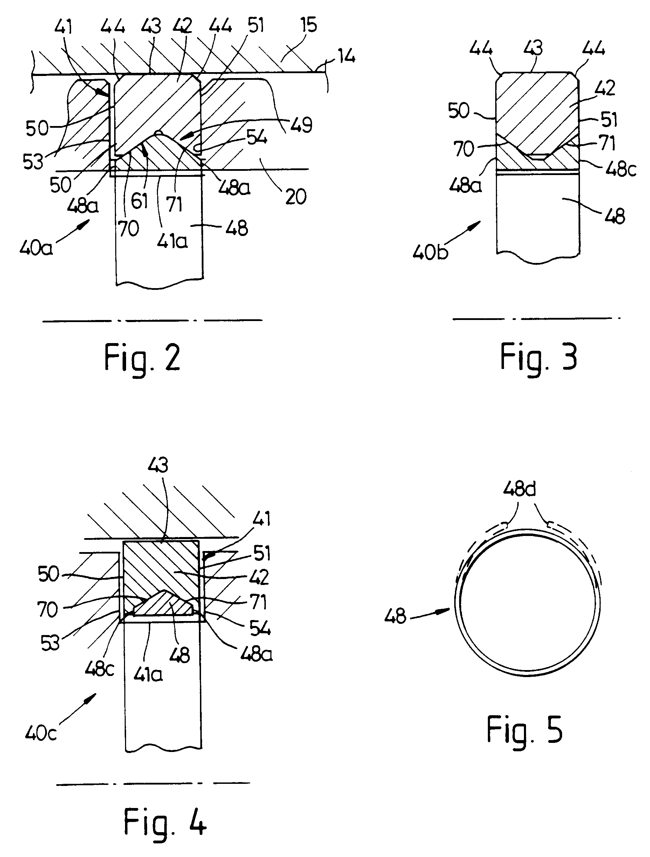

A first embodiment 40a is illustrated in Figure 2. The seal assembly 40a includes an annular seal body 42 which is preferably of solid cross-section having an axially extending outer circumferential surface 43 which sealingly abuts against the wall of bore 14. A ring member 48 is located in abutment with the inner circumferential face 49 of the seal body and serves to provide a radially outwardly directed biasing force for urging the outer face of the seal body radially outwardly.

The seal body 42 has a pair of radially extending end faces 50,51 capable of sealingly abutting against respective side faces 53,54 of groove 41. As shown, end faces 50,51 are planar and extend for the majority of the combined radial height of the assembled seal body and ring member.

The axial width of the seal body is less than the width of groove 41 defined between side faces 53,54 so that on application of hydraulic fluid pressure to one side of the seal assembly the seal assembly slides axially in the groove to bring the end face 50 or 51 on the low pressure side of the seal assembly into sealing abutting contact with side face 53 or 54 respectively.

In addition, the diameter of the bottom 41a of the groove 41 is slightly smaller than the inner diameter of the seal assembly 40a so that fluid pressure may be applied to urge the face 43 radially outwards to ensure sealing contact between face 43 and bore 14.

As seen in Figure 2, the radial extent of the seal assembly, in cross-section, only slightly exceeds the depth of the groove 41. In addition, each end face 50,51 extends for a majority of the combined height of the seal assembly and thereby presents a relatively large sealing face 50 or 51 for abutment with side faces 53,54 respectively with only a relatively small marginal radial portion exposed in the gap between the valve sleeve 20 and bore 14.

In this way it is possible for the seal to be exposed to relatively high fluid pressures whilst resisting extrusion.

In addition, the radial height of the seal assembly is chosen to be substantially the same as or, preferably greater than, the axial extent of the seal body 42. In this way the area of the end face of the seal assembly is greater than the area of the inner circumferential face of the seal assembly so that applied fluid pressure creates a greater force for moving the seal assembly axially. Accordingly sliding of the seal assembly into contact with the low pressure side face 53 or 54 respectively is facilitated. In addition, the outer peripheral edges of the seal body are preferably defined by chamfers 44. These chamfers 44 effectively reduce the axial extent of the face 43 and so during manufacture the extent of the chamfers into face 43 can be altered to alter the area of contact between face 43 and the bore to reduce frictional resistance to axial sliding movement.

As shown in Figure 2, the inner circumferential face 49 of the seal body and the outer circumferential face 61 of the ring member 48 are provided with complimentary profiles preferably in the form of a pair of opposed faces 70,71 inclined to the axis of the seal assembly. Preferably the included angle between faces 70,71 is about 115°. The opposed faces 70,71 serve to prevent relative axial movement between the seal body and ring member so that applied fluid pressure causes the seal assembly to move axially in unison. In addition the opposed faces 70,71 co-operate to axially centralise the seal body and ring member during assembly.

It will be appreciated that other profiles may be adopted if desired to achieve the same functions.

The degree of outward bias of the ring member 48 is chosen to be sufficient to maintain the face 43 of seal body 42 in sealing abutment with the bore 14 during cooling of the seal body 42 and housing 15 and thereby eliminate any gaps which would otherwise occur between the face 43 and bore 14 caused by the difference in co-efficients of thermal expansion of the materials forming the seal body 42 and housing 15.

An alternative embodiment 40b is illustrated in Figure 3 which is of the same construction as the embodiment of Figure 2 except that the direction of the opposed faces 70,71 are reversed.

As shown in Figures 2 and 3, the axial end faces 48a of the ring member 48 are contiguous with the faces 50,51 so as not to interfere with sealing abutment between faces 50,51 and faces 53,54 respectively.

A further embodiment 40c is shown in Figure 4 which is of the same construction as the embodiment of Figure 2 except that the end faces 48a are located in-board of the faces 50,51 and in that faces 50,51 extend for the entire radial height of the seal assembly.

In Figure 5 there is illustrated a ring member 48. The ring member 48 is preferably formed from a strip of resilient metal such as stainless steel which is bent to form a nearly complete ring. This is shown in broken lines in Figure 5. On assembly, the ring member is initially fed into groove 41 and the seal body is then slid axially over the sleeve 20 to enter groove 41 and seat onto the ring member 48. In seating onto the ring member 48 the seal body compresses the ring member bring its opposed ends 48d closer to one another and thereby creates a radially outward biasing force.

## Claims

1. A hydraulic fluid seal assembly for providing a seal between a cylindrical member (20) and a bore (14) formed in a housing (15), the housing and cylindrical member being rotatable relative to one another, the seal assembly being located within an annular groove (41) formed in the cylindrical member and having an annular seal body (42) of a plastics material having an outer axially extending circumferential face (43) for sealing abutment with the bore and at least one radially extending end face (50, 51) for sealing abutment with a side face (53, 54) of the groove, the seal body having an axial extent which is less than the axial extent of said groove and a resilient ring member (48) located in abutment with the inner axially extending circumferential face (49) of the seal body for urging said outer circumferential face radially outward to maintain sealing abutment between said outer circumferential face and the bore, the ring member having an axial end face (48a) contiguous with or located in-board of said end face of the seal body characterised in that the resilient ring member serves to maintain said sealing abutment during cooling of the seal and housing, the resilient ring member being spaced from the groove bottom and the resilient ring and seal body being interconnected so as to be slidably axially movable in unison with one another within said groove.

2. A seal assembly according to claim 1, wherein the seal body has a solid cross-section and is formed from a plastics material having a low co-efficient of friction.

3. A seal assembly according to claim 2, wherein the plastics material is polytetrafluoroethylene.

4. A seal assembly according to claim 3, wherein the polytetrafluoroethylene contains a filler.

5. A seal assembly according to claim 4, wherein the filler is a glass filler.

6. A seal assembly according to any preceding claim, wherein the resilient ring member is a split ring.

7. A seal assembly according to any preceding claim, wherein the inner circumferential face of the seal body and the outer circumferential face of the ring member have complimentary profiles (70, 71) which when engaged in abutment axially centralise the ring member and seal body and/or prevent relative axial movement between the ring member and seal body.

8. A seal assembly according to claim 7 wherein the complimentary profile on both of the ring member and seal body is defined by opposed surfaces inclined relative to the axis of the ring member/seal body.

9. A seal assembly according to claim 8, wherein the included angle between the opposed surfaces is about 155°.

10. A seal assembly according to any preceding claim wherein, in cross-section, the combined radial height of the assembled seal body and ring member is the same as or greater than the axial width of the seal body.

11. A seal assembly according to claim 10, wherein the radially extending end face of the seal body extends radially inwardly from the outer circumference of the seal body for the entire or majority of said combined radial height.

12. A rotary valve including a valve sleeve and a rotor rotatably received in a bore of a housing, the valve sleeve having at least one seal assembly according to any of claims 1 to 11 providing a seal between the sleeve and the bore.

13. A power assisted steering mechanism for a vehicle including a rotary valve according to claim 12.

## Patentansprüche

1. Hydraulikfluid-Dichtungsanordnung zur Herstellung einer Abdichtung zwischen einem zylindrischen Element (20) und einer in einem Gehäuse (15) ausgebildeten Bohrung (14), wobei das Gehäuse und das zylindrische Element relativ zueinander drehbar sind, die Dichtungsanordnung in einer im zylindrischen Element ausgebildeten Ringnut (41) angeordnet ist und einen aus einem Kunststoff bestehenden ringförmigen Dichtungskörper (42) mit einer äußeren, axial verlaufenden Umfangsfläche (43) für Abdichtanlage an die Bohrung und mindestens einer radial verlaufenden Stirnfläche (50, 51) für Abdichtanlage an eine Seitenfläche bzw. Flanke (53, 54) der Nut aufweist, der Dichtungskörper eine Axialerstreckung besitzt, die kleiner ist als die Axialerstreckung der Nut, und ein elastisches Ringelement (48) in Anlage an der inneren, axial verlaufenden Umfangsfläche (49) des Dichtungskörpers angeordnet ist, um die Außenumfangsfläche radial nach außen zu drängen zwecks Aufrechterhaltung der Abdichtanlage zwischen der Außenumfangsfläche und der Bohrung, und wobei das Ringelement eine axiale Stirnfläche (48a) aufweist, die in einer Ebene mit der Stirnfläche des Dichtungskörpers angeordnet oder gegenüber dieser Stirnfläche einwärts versetzt ist, dadurch gekennzeichnet, daß das elastische Ringelement zur Aufrechterhaltung der Abdichtanlage während des Abkühlens von Dichtung und Gehäuse dient, das elastische Ringelement von der Nut-Sohle beabstandet ist und der elastische Ring sowie der Dichtungskörper so miteinander verbunden sind, daß sie gemeinsam miteinander in der Nut axial verschiebbar sind.

2. Dichtungsanordnung nach Anspruch 1, wobei der Dichtungskörper einen massiven Querschnitt aufweist und aus einem Kunststoff eines niedrigen Reibbeiwerts geformt ist.

3. Dichtungsanordnung nach Anspruch 2, wobei der Kunststoff aus Polytetrafluorethylen besteht.

4. Dichtungsanordnung nach Anspruch 3, wobei das Polytetrafluorethylen einen Füllstoff enthält.

5. Dichtungsanordnung nach Anspruch 4, wobei der Füllstoff aus einem Glasfüllstoff besteht.

6. Dichtungsanordnung nach einem der vorangehenden Ansprüche, wobei das elastische Ringelement ein Spaltring ist.

7. Dichtungsanordnung nach einem der vorangehenden Ansprüche, wobei die Innenumfangsfläche des Dichtungskörpers und die Außenumfangsfläche des Ringelements komplementäre Profile (70, 71) aufweisen, die bei gegenseitiger Eingriff-Anlage das Ringelement und den Dichtungskörper axial zentrieren und/oder eine Axialbewegung zwischen Ringelement und Dichtungskörper verhindern.

8. Dichtungsanordnung nach Anspruch 7, wobei das komplementäre Profil von sowohl Ringelement als auch Dichtungskörper durch gegenüberliegende Flächen definiert ist, die relativ zur Achse von Ringelement/Dichtungskörper geneigt bzw. schräggestellt sind.

9. Dichtungsanordnung nach Anspruch 8, wobei der eingeschlossene Winkel zwischen den gegenüberliegenden Flächen etwa 155° beträgt.

10. Dichtungsanordnung nach einem der vorangehenden Ansprüche, wobei die kombinierte radiale Höhe von Dichtungskörper und Ringelement, wenn sie zusammengesetzt sind, im Querschnitt (gesehen) gleich groß oder größer ist als die axiale Breite des Dichtungskörpers.

11. Dichtungsanordnung nach Anspruch 10, wobei die radial verlaufende Stirnfläche des Dichtungskörpers sich über die gesamte kombinierte radiale Höhe oder den größten Teil derselben vom Außenumfang des Dichtungskörpers radial einwärts erstreckt.

12. Drehventil mit einer Ventilhülse und einem in einer Bohrung eines Gehäuses drehbar aufgenommenen Rotor, wobei die Ventilhülse mindestens eine Dichtungsanordnung nach einem der Ansprüche 1 bis 11 zur Herstellung einer Abdichtung zwischen Hülse und Bohrung aufweist.

13. Servolenkmechanismus für ein (Kraft-)Fahrzeug mit einem Drehventil nach Anspruch 12.

## Revendications

1. Joint d'étanchéité à fluide hydraulique destiné à fournir une étanchéité entre un élément cylindrique (20) et un alésage (14) formé dans un boîtier (15), le boîtier et l'élément cylindrique pouvant être mis en rotation l'un par rapport à l'autre, le joint d'étanchéité étant situé dans une rainure annulaire (41) formée dans l'élément cylindrique et ayant un corps d'étanchéité annulaire (42) en matière plastique ayant une face circonférentielle extérieure (43) s'étendant axialement pour venir en butée de façon étanche contre l'alésage, et au moins une face d'extrémité (50, 51) s'étendant radialement pour venir en butée de façon étanche avec une face latérale (53, 54) de la rainure, le corps d'étanchéité ayant une étendue axiale inférieure à l'étendue axiale de ladite rainure et un élément annulaire élastique (48) situé en butée contre la face circonférentielle intérieure (49) s'étendant axialement du corps d'étanchéité pour forcer ladite face circonférentielle extérieure radialement vers l'extérieur afin de maintenir la butée étanche entre ladite face circonférentielle extérieure et l'alésage, l'élément annulaire ayant une face d'extrémité axiale (48a) contiguë a' de ladite face d'extrémité du corps d'étanchéité ou située à l'intérieur d'elle, caractérisé en ce que l'élément annulaire élastique sert à maintenir ladite butée étanche pendant le refroidissement du joint et du boîtier, l'élément élastique étant éloigné du fond de la rainure et l'anneau élastique et le corps d'étanchéité interconnectés de façon à être mobiles axialement de façon coulissante de concert l'un avec l'autre à l'intérieur de ladite rainure.

2. Joint d'étanchéité selon la revendication 1, dans lequel le corps d'étanchéité a une section transversale pleine et est formé à partir d'une matière plastique possédant un faible coefficient de friction.

3. Joint d'étanchéité selon la revendication 2, dans lequel la matière plastique est du polytétrafluoroéthylène.

4. Joint d'étanchéité selon la revendication 3, dans lequel le polytétrafluoroéthylène contient une matière de remplissage.

5. Joint d'étanchéité selon la revendication 4, dans lequel la matière de remplissage est une matière de remplissage en verre.

6. Joint d'étanchéité selon l'une quelconque des revendications précédentes, dans lequel l'élément annulaire élastique est une bague fendue.

7. Joint d'étanchéité selon l'une quelconque des revendications précédentes, dans lequel la face circonférentielle intérieure du corps d'étanchéité et la face circonférentielle extérieure de l'élément annulaire ont des profils complémentaires (70, 71) qui, lorsqu'ils sont en prise en butée, centralisent axialement l'élément annulaire et le corps d'étanchéité et/ou empêchent le mouvement axial relatif entre l'élément annulaire et le corps d'étanchéité.

8. Joint d'étanchéité selon la revendication 7, dans lequel le profil complémentaire a la fois sur l'élément annulaire et sur le corps d'étanchéité est défini par des surfaces opposées inclinées par rapport à l'axe de l'élément annulaire/corps d'étanchéité.

9. Joint d'étanchéité selon la revendication 8, dans lequel l'angle compris entre les surfaces opposées est d'environ 155°.

10. Joint d'étanchéité selon l'une quelconque des revendications précédentes, dans lequel, en section transversale, la hauteur radiale combinée du corps d'étanchéité et de l'élément annulaire assemblés est identique ou supérieure à la largeur axiale du corps d'étanchéité.

11. Joint d'étanchéité selon la revendication 10, dans lequel la face d'extrémité s'étendant radialement du corps d'étanchéité s'étend radialement vers l'intérieur depuis la circonférence extérieure du corps d'étanchéité sur la totalité ou la majorité de ladite hauteur radiale combinée.

12. Soupape rotative comprenant un manchon de soupape et un rotor reçus de manière rotative dans un alésage d'un boîtier, le manchon de soupape ayant au moins un joint d'étanchéité, selon l'une quelconque des revendications 1 à 11, assurant une étanchéité entre le manchon et l'alésage.

13. Mécanisme de direction assistée pour un véhicule comprenant une soupape rotative selon la revendication 12.
